# EUROPEAN PATENT SPECIFICATION

(11) **EP 2 281 461 B1**
(45) Date of publication and mention of the grant of the patent: **08.02.2012**
(21) Application number: 10251043.5
(22) Date of filing: 04.06.2010
(51) Int. Cl.: A21D 13/00

(54) **Cookie products having enhanced stability**
Kekse mit erhöhter Stabilität
Biscuits ayant une meilleure stabilité

(30) Priority: 12.06.2009 US 186700 P
(43) Date of publication of application: 09.02.2011
(73) Proprietor: Kraft Foods Global Brands LLC, Northfield, IL 60093 (US)
(72) Inventor: Zubanas, Steve B., Verona, New Jersey 07044 (US); Chiang, Bin-Yea, Cedar Knolls, New Jersey 07927 (US)
(74) Representative: Bucks, Teresa Anne

(56) References cited:
- EP-A1- 1 733 626
- US-A- 2 998 318
- US-A- 5 652 005
- US-A1- 2008 063 755

## Description

### FIELD

The invention relates generally to food products, and more particularly to a cookie sandwich having enhanced stability.

### BACKGROUND

To be commercially viable, batch processes and continuous processes for baking food items must carefully control not only parameters affecting organoleptic properties such as baking time and baking temperature, but also mechanical aspects of the processes. For certain food items such as cookies, esthetic aspects can be important if not essential to salability, and cookies are often provided with precise and intricate designs that are important to marketing of the products.

In mass production in large commercial baking operations, cookies are often transported on conveyors. Particularly because of thickness, cookies are typically somewhat delicate and susceptible to damage due to uncontrolled impacts with one another or with equipment surfaces. Cookies that are broken, chipped, or otherwise damaged during manufacture may be unsalable or may have reduced value. Cookies typically are configured to have a low profile and low center of gravity with a flat bottom surface that supports the cookie in stable equilibrium on the conveyor, which generally avoids tipping, tumbling or other uncontrolled movement of the cookies relative to the conveyor or to each other.

One popular type of cookie product is a cookie sandwich, which typically comprises a pair of cookies with a filling therebetween. One process of making sandwich cookies comprises bringing the bottom of a first cookie into contact with a bath of filling, such as molten chocolate, to coat the bottom surface to a desired thickness, inverting the coated cookie so that the coated bottom surface becomes the top surface, and "capping" or covering the coated cookie with another cookie that may or may not have its bottom surface coated, thus forming a sandwich with a chocolate filling between the two cookies.

Another process for making sandwich cookies involves dispensing a flowable filling onto the top surfaces of cookies traveling along a conveyor, using gravity and/or fluid pressure to cause downward flow of the filling onto the top surfaces of the cookies, then, as in the process described above, capping or covering the cookies that have the filling on their top surfaces by lowering another cookie into contact with the filling. Commercial cappers must of course be capable of handling the cookies with sufficient precision to avoid unacceptably high rates of damage.

Cookie sandwiches of course tend to be more unstable than their individual component cookies due to their higher center of gravity, and mechanical processes for coating, dispensing fillings and/or assembling the cookie sandwiches must be carefully controlled. To provide cookie sandwiches with satisfactory stability, cookie sandwiches are typically made with relatively thin cookies that have flat outer surfaces approximately equal in diameter to the diameter of the cookies. A filled biscuit with enhanced stability is disclosed in e.g., example 4 of EP 1 733 626.

As consumers' preferences change over time, there is a need for bakers to continually offer new products having improved features relating to nutrition, organoleptic properties, and esthetics. While certain prior art processes of making sandwich cookies have been commercially successful, such processes have generally been limited in some respects as to the configurations of cookies that can be accommodated. Thus, there remains a need not only for cookies having new and improved features, but also for new and improved processes for making them.

### SUMMARY

A cookie product having enhanced stability and an improved method of making cookie products are provided. The cookie product comprises two cookies and a filling therebetween. Each cookie has an inner surface and an outer surface. The outer surface of each cookie comprises a plurality of surfaces, at least one of which is substantially flat.

The top and bottom cookies each have an inner surface and an outer surface, with the inner surfaces of the top and bottom cookies adjacent to and in contact with the filling. The outer surfaces of the top and bottom cookies each comprise a plurality of outer surface portions to provide a generally non-flat outer surface. The outer surface portions may be provided in a variety of sizes and shapes and, preferably, are disposed in "stair-step" pattern such that the distance between the inner surface and outer surface of each outer surface portion increases towards the center of the cookie and decreases towards the sides of the cookie. In a particularly preferred aspect, the "stair-step" configuration of the outer surface portions of the cookie provides a shape that may be perceived as generally convex, rounded, and/or as being an asymmetric sea shell shape. More particularly, each of the top and bottom cookies of the cookie sandwich may have a "Madeleine" configuration.

Of the outer surface portions, at least one outer surface portion is provided with a substantially flat surface such that this outer surface portion is configured to provide stability to the entire cookie during the manufacturing process. The at least one stability providing outer surface portion is configured such that the cookie can balance on the stability providing outer surface portion when disposed on a generally flat supportive surface, such as on a conveyor belt during manufacture, with the inner surface of the cookie facing away (i.e., upwardly) from the supportive surface.

The non-stability providing outer surface portions may be substantially flat or may have various degrees of curvature, including but not limited to convex or concave surfaces as long as the curvature or other features of the surface of outer portions do not affect the stability and balance provided by the substantially flat outer portion.

The configuration of the outer surface portions substantially reduces the likelihood of the cookie tipping before or during application of the coating or filling to the inner surface of the cookie. Similarly, the stability of the cookie substantially reduces the likelihood of the cookie tipping after application of the coating or filling and, as a result, prevents the coating from dripping or running off the side of the cookie.

The cookies and method of stabilizing cookies during manufacture as described herein advantageously allow cookie manufacturers to prepare cookie sandwiches or coated cookies having aesthetically pleasing, non-flat outer surfaces while still providing sufficient stability to avoid incurring unacceptably high rates of damage and production of non-salable cookie sandwiches having aesthetic defects, such as due to uneven application of filling or leaking of filling caused by the cookies tipping or tumbling during manufacturing. The cookies and method of stabilizing cookies as described herein also advantageously allow cookie manufacturers to prepare cookie sandwiches with thin cookies, e.g., having a thickness of less than about 0.64 cm (0.25 inches).

### BRIEF DESCRIPTION OF THE DRAWINGS

Preferred embodiments will now be described, by way of example only, with reference to the accompanying drawings in which:

FIG. 1 is a perspective view of a cookie sandwich;

FIG. 2 is a top plan view of the cookie sandwich of FIG. 1;

FIG. 3 is a front elevational view of the cookie sandwich of FIG. 1;

FIG. 4 is a back elevational view of a cookie sandwich of FIG. 1; and

FIG. 5 is a side elevational view of a cookie sandwich of FIG. 1.

### DETAILED DESCRIPTION

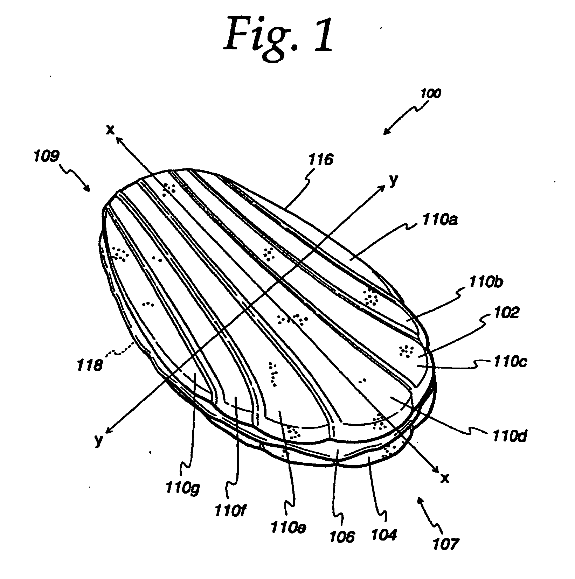

FIGS. 1 to 5 illustrate a cookie sandwich product 100 having a "stair-step" shaped outer surface. The illustrated cookie sandwich 100 generally comprises a top cookie 102, a bottom cookie 104, and a filling 106 disposed between the top and bottom cookies 102 and 104, respectively. The term "cookie" as used herein includes biscuits, wafers, food bars, and the like.

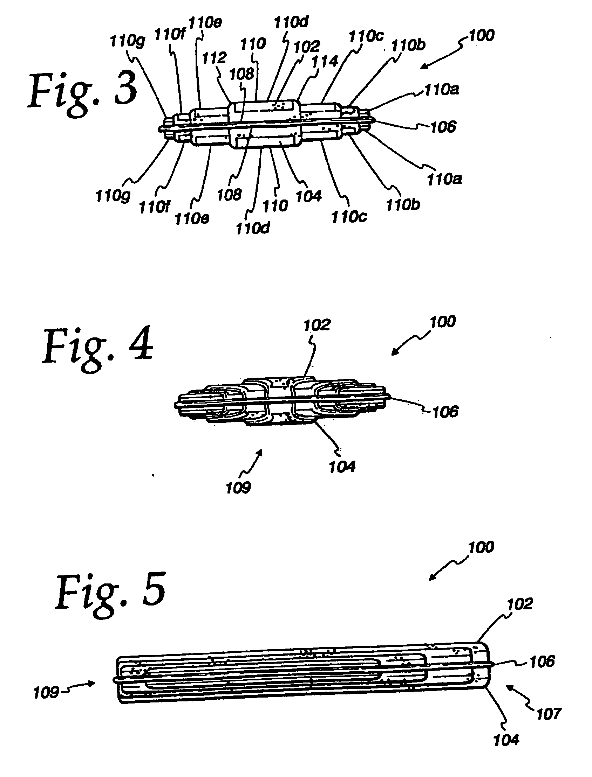

As shown in FIG. 3, the top and bottom cookies each have a first end 107, second end 109, a length between the ends, two sides 111, a width between the sides 111, a center portion 113, inner surface 108 and an outer surface 110, with inner surfaces 108 of the top and bottom cookies adjacent to and in contact with filling 106. Preferably, inner surface 108 is substantially flat. Outer surface 110 of the top and bottom cookies 102 and 104 each comprise a plurality of outer surface portions to provide a non-flat outer surface. As shown in FIGS. 1 to 3, outer surfaces 110 each comprise outer surface portions 110a to 110g. The outer surface portions may be provided in a variety of sizes and shapes.

In one aspect, and as illustrated in FIGS. 3 to 5, the outer surface portions 110a to 110g are disposed in a "stair-step" pattern such that the distance between the inner surface 108 and outer surface 110 of each outer surface portion increases from portions 110a to 110d and decreases from portions 110d to 110g. In a particularly preferred aspect and as shown in the figures, the "stair-step" configuration of the outer surface portions of the upper and lower cookies 102 and 104 provides a sea shell shape, such as a "Madeleine" shape. The outer surface portions 110a to 110g may also be in the form of striations, such that each portion is separated from the adjacent portion by a groove.

Of the outer surface portions 110a to 110g, at least outer surface portion 110d is substantially flat and, as described in greater detail below, is configured to provide stability to the entire cookie during the manufacturing process. A plurality of stability providing surface portions may be used, if desired, although it is preferred that only one outer surface is configured to provide stability for the entire cookie. In one aspect, the stability providing outer surface portion is provided in the configuration of a plateau. The flat surface should also be substantially free of surface bubbles or blisters which can result in crumbling or instability to the cookies during transport on a conveyor belt during the manufacturing process.

The outer surface portions not necessary for providing stability to the cookie may have a variety of configurations. Outer surface portions 110a, 110b, 110c, 110e, 110f, and 110g may be substantially flat (as shown in FIGS. 1 to 5) or may have various degrees of curvature, including but not limited to convex or concave surfaces as long as the curvature or other features of the surface of outer portions 110a, 110b, 110c, 110e, 110f, and 110g do not affect the stability and balance provided by outer portion 110d. If desired, lateral edges 112 and 114 of outer surface portion 110d may curve toward outer surface portions 110c and 110e without affecting the stability of the cookie as long as substantially all of outer surface portion 110d is substantially flat.

The at least one stability providing outer surface portion (portion 110d as shown in FIGS. 1 to 5) is configured such that the cookie 102 and/or 104 can balance on outer surface portion 110d when disposed on a generally flat supportive surface, such as on a conveyor belt during manufacture, with inner surface 108 facing away (i.e., upwardly) from the supportive surface.

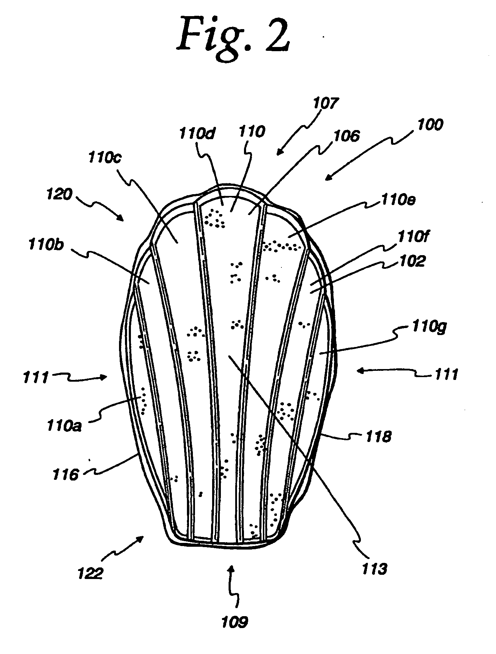

In one aspect, as measured between lateral edges 112 to 114 of outer surface portion 110d, outer surface portion 110d has a width that is about 10 about 40 percent the total width of the cookie 102 or 104, in another aspect about 10 to about 35 percent of the total width of the cookie, in another aspect about 10 to about 30 percent of the total width of the cookie, in another aspect about 10 to about 20 percent of the total width of the cookie, as measured from left lateral edge 116 to right lateral edge 118 along the same axis. For example, as shown in FIG. 2, the average width of one half 120 of cookie 102 is wider than the other half 122 of cookie 102. The width of outer surface portion 110d varies along its length, and is greater at one end than at the other end. Therefore, the width of outer surface portion 110d in comparison to the total width of the cookie also varies along the length of outer surface portion 110d. The outer surface portion 110d may also have a length that is longer than the other outer portions. The greater length of outer portion 110d can provide additional stability to the cookie. The cookie should be configured such that the outer surface portion 110d aligns vertically with the center of gravity of the cookie.

The configuration of outer surface portion 110d provides stability and balance to the cookie 102 and/or 104 during manufacture of the cookie sandwich. In particular, such a configuration can enable the outer surface of the cookie in some embodiments to have a rounded appearance, and in some embodiments to have the shell-like appearance of a "Madeleine" cake or cookie, while offering sufficient stability to substantially reduce the likelihood of the cookie tipping before or during application of the coating or filling to the inner surface of the cookie. Similarly, the stability of the cookie substantially reduces the likelihood of the cookie tipping after application of the coating or filling and, as a result, prevents the coating from dripping or running off the side of the cookie, as does the substantially flat outer surface of certain earlier cookie sandwiches (e.g., certain OREO® cookies (Kraft Foods, Northfield, Illinois).

Other configurations may also be used as long as at least one of the outer portions can provide stability and balance to the cookie 102 and/or 104 during manufacture of the cookie sandwich. For example, the stability-providing outer portion can be configured as a raised surface around the perimeter of the cookie. The raised perimeter can be provided in a variety of widths and generally can be provided in a width that is less than 10 percent of the total width of the cookie and, in another aspect, less than 5 percent of the total width of the cookie.

The cookies useful herein may be formed from a variety of cookie manufacturing methods, including, for example, cutting-machine, bar-machine, rotary molding, batter deposition, extrusion, and wire-cutting processes, and the like, depending on the type and dough formulation used. Preferably, rotary molding is used. In the preferred aspect, cookie shaped discs of dough are prepared using a rotary molder, extracted onto a conveyor belt, and baked in an oven, preferably in an oven in a conveyorized system. Preferably, conveyorized impingement oven equipment such as that used in baking crackers and cookies is used but other oven types may be used depending on the particular requirements of the manufacturing equipment or process used.

For the preparation of the cookies used to form the cookie sandwich, a variety of cookie recipes may be used, depending on the desired characteristics of the cookies, such as flavor, consistency, firmness, tenderness, mouthfeel, and the like, as well as the particular cookie manufacturing methods used. For example, a typical recipe might include sugar, flour, butter, shortening, lecithin, water, and eggs with the particular quantities and ratios of ingredients varying depending on the desired characteristics and methods used. Generally, dough formulations for rotary molding processes have a lower moisture content than, for example, dough formulations for batter processes.

The individual cookies forming the top and bottom of the cookie sandwich, as well as the cookie sandwich itself, can be formed in a variety of shapes, sizes, and thicknesses. For example, the cookies may have a regular or irregular geometric shape, a symmetrical shape or an asymmetrical shape. Regular geometric shapes include, for example, rectangular, square, circular, rectangular with rounded ends, oval-cross sections, and the like. The cookies forming the top and the bottom of the cookie sandwich may have a same, similar, or different shape, size, and thickness. In a preferred aspect, the cookies forming the top and bottom of the cookie sandwich have the same shape, size, and thickness. In particularly preferred aspect, the cookies are in the shape of a sea shell having symmetry about the long axis (x-axis) and asymmetry about the short axis (y-axis), as shown in FIG. 1.

In cookie manufacture, a coating applicator is mounted above the conveyor belt. The coating applicator may be employed for applying a coating or depositing one or more coatings or fillings to the inner surface of at least one of the cookies of the cookie sandwich as the cookies are transported on the conveyor belt The coating applicator may be conventional equipment. Preferably, the flow of the coating is controlled to provide a substantially uniformly thick and continuous coating across the cookie portion.

Accordingly, the cookies described herein advantageously allow cookie manufacturers to prepare cookie sandwiches or coated cookies having aesthetically pleasing, non-flat outer surfaces while still providing the stability of a cookie having a substantially flat outer surface during manufacture. As a result, manufacturing costs due to production of non-saleable cookie sandwiches having aesthetic defects, such as due to uneven application of filling or leaking of filling caused by the cookies tipping during manufacturing, can be substantially reduced.

As used herein, the terms "filling" and "coating" are used interchangeably. The filling may be any conventional filling, such as, for example, crème, jelly, cream, jam, pudding, chocolate, peanut butter, cream cheese, caramel, cookie dough, the like, and combinations thereof. The filling may include a variety of flavors such as, for example, vanilla, Bavarian cream, buttercream, fruit (e.g., lemon, strawberry, cherry, apricot, raspberry, orange, passion fruit, the like, and combinations thereof), cappuccino, praline, hazelnut, mocha, coffee, cocoa, caramel, mint, the like, and combinations thereof. The filling may optionally include particulate material or chunks, for example, chocolate chips, butterscotch chips, or other flavor chips, nuts, pieces of fruit, coconut, candy, sprinkles, or the like. Preferably, the filling is chocolate comprising at least 40 percent cocoa.

The filling should have a viscosity such that the filling does not leak or bleed out from the sides of the cookie sandwich during or after application of the filling. In one aspect, the filling has a viscosity of about 10 Pa.s to about 80 Pa.s (10,000 centipoise to about 80,000 centipoise) at room temperature. It is also preferable that the filling will solidify or set within about 6 to about 15 minutes.

The filling should be applied to the inner surface of the cookie in an amount sufficient to provide a filling that is substantially coextensive with the inner surfaces of the cookies upon application of the second cookie to the coated cookie using conventional capping equipment, as is readily known in the art. For purposes herein, the term "substantially coextensive" is intended to mean that the filling essentially covers the inner surface of the cookie with minimal non-overlapping area with at least about 92 percent, preferably at least about 95 percent, and more preferably at least about 98 percent of the inner surface of the cookie covered by the filling. The filling should be coextensive with the inner surface of the cookie in order to provide optimal flavor and mouthfeel and enjoyable eating experience. In one aspect, the filling is at least about 30 percent, preferably at least about 35 percent, and most preferably at least about 40 percent by weight of the final cookie sandwich.

In another aspect, one or more of the cookies comprising the cookie sandwich may have one or more openings or windows to permit viewing of the filling. For example, the opening or window may be provided in a variety of shapes, such as, but not limited to, circles, squares, rectangles, diamonds, animal shapes, holiday shapes, and the like.

Although the dimensions of the cookies can vary, it is preferred that the cookies have a ratio of length along the x-axis to width along the y-axis of at least about 1.5 to 1. It is also preferred that the cookies have a length of at least about 6.22 cm (2.45 inches) long at the longest point along the x-axis.

In one aspect, the individual cookies forming the cookie sandwich generally have a thickness ranging between about 0.10 cm to about 0.64 cm (0.04 inches to about 0.25 inches), preferably with a thickness of about 0.25 cm to about 0.56 cm (0.1 to about 0.22 inches) at the thickest point and about 0.15 cm to about 0.32 cm (0.06 inches to about 0.125 inches) at the thinnest point. The filling is generally applied to provide a filling thickness of about 0.25 cm to about 0.46 cm (0.10 to about 0.18 inches). Accordingly, the assembled cookie sandwich is about 0.76 cm to about 1.78 cm (0.30 to about 0.7 inches) thick at its thickest section and about 0.46 cm to about 1.14 cm (0.18 to about 0.45 inches) thick at its thinnest section.

Of course, while the disclosure herein is described in respect to the manufacture of cookie sandwiches, the disclosure is also applicable to individual cookies having a coating and the manufacture thereof.

The cookie products described herein can be packaged in any suitable manner. In one embodiment, the cookie sandwiches are disposed in a tray which is wrapped with a flexible film. Alternatively, the cookie products may be individually wrapped such as in conventional flexible films known in the art and use for this general purposes. The individually wrapped cookie products can be packaged in a secondary container or a plurality of wrapped cookie sandwiches can be packaged in a common secondary container or carton.

A method is also described herein for providing stability and balance to cookie products during manufacture. The method comprises providing a cookie having an inner surface and an outer surface, with the outer surface of the cookie comprising a plurality of outer surface portions configured to provide a generally non-flat outer surface, with at least one of the outer surface portions configured provide stability to the cookie during the manufacturing process. The at least one stability providing outer surface portion is configured such that the cookie can balance on the stability providing outer surface portion when disposed on a generally flat supportive surface, such as on a conveyor belt during manufacture, with the inner surface of the cookie facing away (i.e., upwardly) from the supportive surface.

While preferred embodiments of the invention have been described above and illustrated in the drawings, these are by way of example only.

## Claims

1. A cookie product having enhanced stability during manufacture, the cookie product comprising a top cookie and a bottom cookie and a filling therebetween, the top and bottom cookies each having a first end, a second end, a length between the top end and bottom end, two sides adjacent the top and bottom ends, a width between the sides, a center portion, and an inner and an outer surface, with the inner surfaces adjacent to and in contact with a filling, the inner surfaces being substantially flat, the outer surfaces each comprising a plurality of outer surface portions to provide a non-flat outer surface, at least one of the outer surface portions being substantially flat and having a width substantially less than the width of the cookie, and being configured to provide stability to the cookie when the at least one stability providing outer surface portion is disposed on a generally flat supportive surface.

2. The cookie product of claim 1, wherein the stability providing outer surface portion has a generally rounded appearance similar to that of a Madeleine cake.

3. The cookie product of claims 1 or 2, wherein the plurality of outer surface portions are configured in a stair step configuration such that the distance between the outer surface and inner surface is greater at the center portion of the cookie than at the sides of the cookie or wherein the plurality of outer surface portions are configured to provide a sea shell shape.

4. The cookie product of any of the preceding claims, wherein the stability providing outer surface portion has a width that is 10 to 40 percent of the width of the cookie.

5. The cookie product of any of the preceding claims, wherein the width at one end of the cookie is greater than the width at the other end of the cookie.

6. The cookie product of any of the preceding claims, wherein the stability providing outer surface portion is configured as a plateau extending along the length of the cookie, preferably the plateau having a width that is greater at the top of the cookie than at the bottom of the cookie.

7. The cookie product of any of the preceding claims, wherein the filling has a viscosity of 10 Pa.s to 80 Pa.s (10,000 centipoise to 80,000 centipoise) and/or wherein the filling is substantially coextensive with the inner surfaces of the cookies.

8. The cookie product of any of the preceding claims, wherein the cookies have a ratio of length to width of at least 1.5 to 1.

9. The cookie product of any of the preceding claims, wherein the sides of the cookies are symmetric and/or wherein the ends are asymmetric.

10. The cookie product of any of the preceding claims, wherein the length of the stability providing outer surface portion is greater than the length of the other outer surface portions.

11. A method for providing stability and balance to cookie products during manufacture, the method comprising providing a cookie having an inner surface and an outer surface, the outer surface of the cookie comprising a plurality of outer surface portions configured to provide a generally non-flat outer surface, with at least one of the outer surface portions configured provide stability to the cookie during the manufacturing process.

12. The method of claim 11, wherein the plurality of outer surface portions are configured in a stair step configuration such that the distance between the outer surface and inner surface is greater at the center portion of the cookie than at the sides of the cookie.

13. The method of claims 11 or 12, wherein the stability providing outer surface portion has a width that is 10 to 40 percent of the width of the cookie.

14. The method of claims 11, 12, or 13, wherein the stability providing outer surface portion is configured as a plateau extending along the length of the cookie, preferably the plateau having a width that is greater at the top of the cookie than at the bottom of the cookie.

15. The method of claims 11, 12, 13, or 14, wherein the length of the stability providing outer surface portion is greater than the length of the other outer surface portions.

## Patentansprüche

1. Keksprodukt mit verbesserter Stabilität während der Herstellung, wobei das Keksprodukt einen oberen Keks und einen unteren Keks und eine Füllung dazwischen umfasst, wobei die oberen und unteren Kekse ein erstes Ende, ein zweites Ende, eine Strecke zwischen dem oberen Ende und dem unteren Ende, zwei Seiten, die den oberen und unteren Enden benachbart sind, eine Strecke zwischen den Seiten, einen zentralen Teil und eine innere und eine äußere Oberfläche aufweisen, wobei die inneren Oberflächen an eine Füllung angrenzen und in Kontakt mit der Füllung sind, wobei die inneren Oberflächen im Wesentlichen flach sind, die äußeren Oberflächen jeweils mehrere äußere Oberflächenteile umfassen, um eine nicht-flache äußere Oberfläche bereitzustellen, wobei mindestens eines der äußeren Oberflächenteile im Wesentlichen flach ist und eine Breite aufweist, die im Wesentlichen kleiner als die Breite des Kekses ist und konfiguriert ist, um dem Keks eine Stabilität zu verleihen wenn der mindestens Eine stabilitätsliefernde äußere Oberflächenteil auf eine im Allgemeinen flache Trägeroberfläche angeordnet wird.

2. Keksprodukt nach Anspruch 1, worin der stabilitätsliefernde äußere Oberflächenteil ein im Allgemeinen abgerundetes Erscheinungsbild ähnlich einem adeleine-Gebäck hat.

3. Keksprodukt nach Anspruch 1 oder 2, worin die Mehrzahl der äußeren Oberflächenteile in Treppenstufenkonfiguration konfiguriert ist, so dass der Abstand zwischen der äußeren Oberfläche und der inneren Oberfläche am zentralen Teil des Kekses größer ist als an den Seiten des Kekses oder worin die Mehrzahl der äußeren Oberflächenteile konfiguriert ist, um eine Meeresmuschel-Form bereitzustellen.

4. Keksprodukt nach einem der vorhergehenden Ansprüche, worin der stabilitätsbereitstellende äußere Oberflächenteil eine Breite aufweist, die 10 bis 40 Prozent der Breite des Kekses ist.

5. Keksprodukt nach einem der vorhergehenden Ansprüche, worin die Breite an einem Ende des Kekses größer als die Breite am anderen Ende des Kekses ist.

6. Keksprodukt nach einem der vorhergehenden Ansprüche, worin der stabüitätsbereitstellende äußere Oberflächenteil als ein Plateau konfiguriert ist, das sich entlang der Länge des Kekses erstreckt, wobei das Plateau vorzugsweise eine Breite hat, die am oberen Ende des Kekses größer ist als an der unteren Seite des Kekses.

7. Keksprodukt nach einem der vorhergehenden Ansprüche, worin die Füllung eine Viskosität von 10 Pa·s bis 80 Pa·s (10.000 Centipoise bis 80.000 Centipoise) aufweist und/oder worin die Füllung im Wesentlichen flächengleich mit den inneren Oberflächen der Kekse ist.

8. Keksprodukt nach einer der vorhergehenden Ansprüche, worin die Kekse ein Verhältnis von Länge zu Breite von mindestens 1,5 zu 1 aufweisen.

9. Keksprodukt nach einer der vorhergehenden Ansprüche, worin die Seiten der Kekse symmetrisch sind und/oder worin die Enden asymmetrisch sind.

10. Keksprodukt nach einer der vorhergehenden Ansprüche, worin die Länge des stabilitätsliefernden äußeren Oberflächenteils größer als die Länge der anderen äußeren Oberflächenteile ist.

11. Verfahren zum Bereitstellen von Stabilität und Ausgewogenheit für Keksprodukte während der Herstellung, wobei das Verfahren die Bereitstellung eines Kekses mit einer inneren Oberfläche und einer äußeren Oberfläche umfasst, wobei die äußere Oberfläche des Kekses mehrere äußere Oberflächenteile umfasst, die konfiguriert sind, um eine im Allgemeinen nicht-flache äußere Oberfläche bereitzustellen, wobei mindestens eines der äußeren Oberflächenteile konfiguriert ist, um dem Keks Stabilität während des Herstellungsverfahrens zu verleihen.

12. Verfahren nach Anspruch 11, worin die Mehrzahl der äußeren Oberflächenteile in einer Treppenstufenkonfiguration konfiguriert wird, so dass der Abstand zwischen der äußeren Oberfläche und der inneren Oberfläche an dem zentralen Teil des Kekses größer als an den Seiten des Kekses ist.

13. Verfahren nach Anspruch 11 oder 12, worin der stabilitätsbereitstellende äußere Oberflächenteil eine Breite aufweist, die 10 bis 40 Prozent der Breite des Kekses ist.

14. Verfahren nach einem der Ansprüche 11, 12 oder 13, worin der stabilitätsbereitstellende äußere Oberflächenteil als ein Plateau entlang der Länge des Kekses konfiguriert wird, wobei das Plateau vorzugsweise eine Breite hat, die am oberen Ende des Kekses größer ist als an der unteren Seite des Kekses.

15. Verfahren nach den Ansprüchen 11, 12, 13 oder 14, worin die Länge des stabilitätsbereitstellenden äußeren Oberflächenteils größer als die Länge der anderen äußeren Oberflächenteile ist.

## Revendications

1. Produit de type biscuit présentant une stabilité améliorée en cours de fabrication, le produit de type biscuit comprenant un biscuit supérieur et un biscuit inférieur et un fourrage entre ces derniers, chacun des biscuits supérieur et inférieur ayant une première extrémité, une deuxième extrémité, une longueur entre l'extrémité supérieure et l'extrémité inférieure, deux côtés adjacents aux extrémités supérieure et inférieure, une largeur entre les côtés, une partie centrale, et des surfaces interne et externe, avec les surfaces internes adjacentes et en contact avec un fourrage, les surfaces internes étant essentiellement planes, les surfaces externes comprenant chacune une pluralité de parties de surface externe pour conférer une surface externe non plane, au moins une des parties de surface externe étant essentiellement plane et ayant une largeur sensiblement inférieure à la largeur du biscuit, et étant configurée pour conférer la stabilité au biscuit lorsque l'au moins partie de surface externe procurant la stabilité est disposée sur une surface de support globalement plane.

2. Produit de type biscuit de la revendication 1, dans lequel la partie de surface externe procurant la stabilité a une apparence globalement arrondie similaire à celle d'un gâteau de type Madeleine.

3. Produit de type biscuit des revendications 1 ou 2, dans lequel la pluralité de parties de surface externe sont configurées selon une configuration en escalier de sorte que la distance entre la surface externe et la surface interne soit plus grande au niveau de la partie centrale du biscuit qu'au niveau des côtés du biscuit ou dans lequel la pluralité de parties de surface externe sont configurées pour donner une forme de coquillage.

4. Produit de type biscuit de l'une des revendications précédentes, dans lequel la partie de surface externe procurant la stabilité a une largeur qui représente 10 à 40 pourcent de la largeur du biscuit.

5. Produit de type biscuit de l'une des revendications précédentes, dans lequel la largeur au niveau d'une extrémité du biscuit est plus grande que la largeur au niveau de l'autre extrémité du biscuit.

6. Produit de type biscuit de l'une des revendications précédentes, dans lequel la partie de surface externe procurant la stabilité est configurée comme un plateau qui s'étend le long de la longueur du biscuit, le plateau ayant de préférence une largeur qui est plus grande au niveau de la partie supérieure du biscuit qu'au niveau de la partie inférieure du biscuit.

7. Produit de type biscuit de l'une des revendications précédentes, dans lequel le fourrage a une viscosité qui vaut entre 10 Pa.s et 80 Pa.s et/ou dans lequel le fourrage a sensiblement la même étendue que les surfaces internes des biscuits.

8. Produit de type biscuit de l'une des revendications précédentes, dans lequel les biscuits ont un rapport longueur sur largeur d'au moins 1,5 à 1.

9. Produit de type biscuit de l'une des revendications précédentes, dans lequel les côtés des biscuits sont symétriques et/ou dans lequel les extrémités sont asymétriques.

10. Produit de type biscuit de l'une des revendications précédentes, dans lequel la longueur de la partie de surface externe procurant la stabilité est plus grande que la longueur des autres parties de surface externe.

11. Procédé permettant de fournir la stabilité et l'équilibre à des produits de type biscuits en cours de fabrication, le procédé comprenant le fait de fournir un biscuit présentant une surface interne et une surface externe, la surface externe du biscuit comprenant une pluralité de parties de surface externe configurées pour donner une surface externe globalement non plane, avec au moins une des parties de surface externe configurée pour conférer la stabilité au biscuit lors du processus de fabrication.

12. Procédé de la revendication 11, dans lequel la pluralité de parties de surface externe sont configurées selon une configuration en escalier de sorte que la distance entre la surface externe et la surface interne soit plus longue au niveau de la partie centrale du biscuit qu'au niveau des côtés du biscuit.

13. Procédé des revendications 11 ou 12, dans lequel la partie de surface externe procurant la stabilité a une largeur qui vaut entre 10 et 40 pourcent de la largeur du biscuit.

14. Procédé des revendications 11, 12 ou 13, dans lequel la partie de surface externe procurant la stabilité est configurée comme un plateau qui s'étend le long de la longueur du biscuit, le plateau ayant de préférence une largeur qui est plus grande au niveau de la partie supérieure du biscuit qu'au niveau de la partie inférieure du biscuit.

15. Procédé des revendications 11, 12, 13 ou 14, dans lequel la longueur de la partie de surface externe procurant la stabilité est plus grande que la longueur des autres parties de surface externe.
